# EUROPEAN PATENT APPLICATION

(11) **EP 2 282 510 A2**
(43) Date of publication of application: **09.02.2011**
(21) Application number: 10184564.2
(22) Date of filing: 05.05.2004
(51) Int. Cl.: H04N 1/00, H04N 1/60

(54) **Calibration of imaging devices for minimizing individual color reproducing errors of such devices**

(62) Divisional of application: 04010673.4
(71) Applicant: LaserSoft Imaging AG, 24105 Kiel (DE)
(72) Inventor: Zahorsky, Karl-Heinz, 24105 Kiel (DE)
(74) Representative: Eisenführ, Speiser & Partner

(57) **Abstract**

The present invention relates to a calibration target (1) containing calibration data, the calibration data (2, 5, 6) containing at least one color (2, 5), for calibrating an imaging device for minimizing an individual color reproducing error of such a device. The inventive target (1) comprises a pointer (6), preferably comprising a barcode (6), whereby the pointer (6) contains information about reference data associated to the calibration target (1), the reference data containing information about the at least one color (2, 5). The present invention further relates to methods and systems using such a target (1).

## Description

### BACKGROUND OF THE INVENTION

The present invention relates to calibration of imaging devices, such as scanners or digital cameras, for minimizing individual color reproducing errors of such devices.

In the prior art scanners or digital cameras are used to scan or capture images. However, the quality of such an image reproducing process is dependent not only on the quality of the used devices but also on the way how scanners or digital cameras perform such an image reproducing process. This means that a certain scanner or a certain digital camera has always its own characteristics to reproduce the scanned or captured image which characteristics may be different for different images. These individual characteristics of reproducing images may however lead to differences between the original image, e.g. the original colors of the image, and the reproduced image, e.g. the reproduced colors in the reproduced image.

To minimize such individual color reproducing differences or errors of scanners or digital cameras it is known to calibrate scanners or digital cameras before using them.

Although color correction of a scanned image or of a digital photograph can be done within a software based image editor, by using such an editor it is likely having to make the same types of corrections over and over, e.g. images that are consistently too dark or have a reddish cast to them. Calibrating a scanner or a digital camera can therefore save much image editing time and provide better reproduction quality of the reproduced pictures.

Calibrating a scanner or a digital camera can therefore help insuring that what is scanned and what is reproduced is nearly the same without investing a lot of time. Calibrating scanners and digital cameras therefore helps yield more consistent color reproduction between these devices. With other words can a calibration of a scanner or of a digital camera produce a more reliable color matching between original image and reproduced image.

Scanner calibration can go along with monitor and printer calibration, also, to help getting the best color match possible.

To perform a calibration of a scanner or a digital camera it is known to use a so-called target. These targets basically are normally rectangular images containing a number of small squares or fields, e.g. 22x13=286 fields, each field showing a certain color. Such targets go along with digital reference files which contain information about the true color value in each field. When calibrating a scanner or a digital camera these targets are placed on the scanner or in front of the digital camera and the color information captured by the scanner or the digital camera is compared by the scanner or by the digital camera with the true color value which belongs to each field in the digital file. When the scanner or the digital camera detects any deviation between the color value measured by it for a certain field and the true color value contained in the digital file for the respective color field, then the scanner or the digital camera can use the detected difference to calibrate itself. For this purpose the device can generate a so-called DCC (Digital Color Calibration) file in which all the calibration information is stored.

After such a calibration the scanner or the digital camera can then use the DCC file when operating.

To ensure that the digital file which goes along with the target contains the true color information such targets are measured with highly sensitive devices to provide very accurate color information and to therefore minimize any deviation between the color information in the digital file and the true color on the target. Since these kind of highly sensitive devices are extremely expensive, sometimes only one target of a whole charge of targets is measured to lower the cost for each target. However, to maximize the effect of target based calibration it is recommended to use targets which are measured individually.

Targets can be reflective or transparent to provide calibration for reflective or transparent originals.

Normally, targets are according to certain standards to enable the producers of scanners and digital cameras to provide for a correct use by the device of the information contained in the target and in the associated digital reference file for the target.

However, such targets and the associated digital reference files normally are sold to a user in great numbers to provide the user with well suited targets for each device or film. Therefore, it is important for the user of such a target to select the correct reference file for a certain target among the reference files provided together with the targets.

### SUMMARY OF THE INVENTION

It is an object of the invention to provide improved calibration of imaging devices for minimizing individual color reproducing errors of such devices.

The object is solved by the independent claims.

The present invention comprises the perception that during the above-described calibration process it is likely that errors occur when associating a certain reference file containing the true color information to the target which is just scanned or captured. This is because for finding the correct reference file it is normally necessary to verify an eight- to ten digit code for indexing a set of reference files each belonging to different target, which code has to be identified out of a huge pool of similar looking numerical sets. Confusing such code numbers can have a negative effect on color reproduction.

Moreover, sometimes it can happen that an error in choosing the correct code number cannot be recognized right away when looking at the reproduced image without comparing the reproduced image to the original. This is because such errors can occur in a form that the therefore erroneous color looks natural, also. However, when a user wants to reproduce a number of different images such a calibration error can have a bad impact since the user wants the true color and not some arbitrary color.

Therefore, it is of great importance to make sure that during the calibration process it is always chosen the correct reference file for a certain target to minimize individual color reproducing errors when performing such a calibration process.

The present invention describes a unique simplification of the afore mentioned complex processes of verifying a reference file for a certain target by integrating a pointer to the correct reference file in the target, It is therefore no more possible to have unintended errors when linking the reference file to the target. Furthermore, no additional step is necessary to link the reference file to the target since the pointer is scanned or captured together with the target in only one single step.

Moreover, the concept of the present invention can be integrated into the known standard targets, such as into IT8 targets, IT8 being a commonly known standard for targets.

According to a preferred embodiment of the present invention each target has a different pointer, which links it to the correct reference file. However, it is also possible to have a certain pointer for a number of targets, e.g. a production charge.

It is preferred that an imaging software for the used scanner or the used digital camera reads the target with the pointer, preferred automatically, and identifies the associated reference file containing the reference color data and allocates these data for the calibration function.

To achieve this it is preferred that the scanner, the digital camera, a computer, or an attached host computer or an internet website is consulted by the scanner, the digital camera or the imaging software for the specific digital reference file.

The complex process of calibration can therefore be done automatically. Due to the present invention it is possible to reduce the time required for the process of calibration to a minimum of e.g. only 20 to 30 seconds depending on the scanning or capturing speed of the device to be calibrated.

Additionally, by the present invention a quality increase can be gained with reference to print runs which can be kept smaller in number and hence the print runs have a higher grade of precision, which allows to have a very low DELTA-value of the resulting print. The lower the DELTA-value of the print, the smaller the deviation of the color of the print compared to the true color of the scanned or captured image.

Preferred embodiments are shown by the dependent claims.

The invention can be partly embodied or supported by one or more suitable software programs, which can be stored on or otherwise provided by any kind of data carrier, and which might be executed in or by any suitable data processing unit. Software programs or routines are preferably applied to the realization of the inventive method.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).

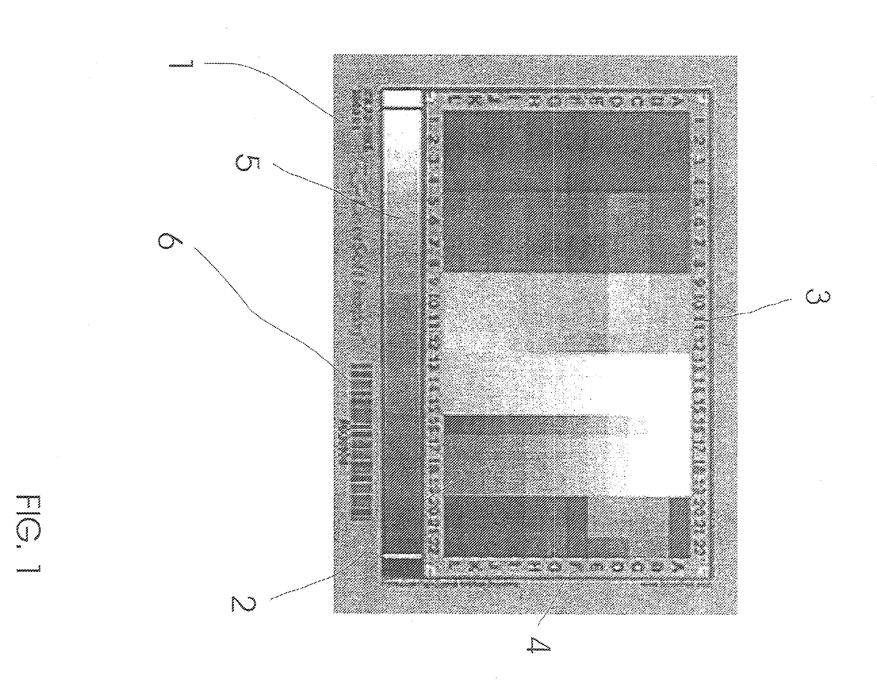

- Fig. 1: shows a schematic illustration of an embodiment of the present invention.

### DETAILED DESCRIPTION OF A PREFERRED EMBODIMENT OF THE INVENTION

Referring now in greater detail to the drawing, Fig. 1 shows a calibration target 1 for calibrating an imaging device for minimizing an individual color reproducing error of such a device. The calibration target 1 contains calibration data 2 and 5. The calibration data 2, 5 containing twenty-two columns and 12 lines of different colors 2 and one line of 14 different grays 5. The calibration target 1 serves to calibrate an imaging device (not shown) for minimizing an individual color reproducing error of such a device. The calibration target 1 further comprises a barcode 6, serving as a pointer. The barcode 6 contains information about reference data (not shown) associated to the calibration target 1. The reference data containing information about the true value of each colors 2 and of each gray 5.

The target 1 shown in Fig. 1 can be used in a method (not shown) of calibrating an imaging device for minimizing an individual color reproducing error of such a device. Such a method can comprise the steps of using the device to capture calibration data 2, 5, 6 of the calibration target 1, allocating reference data associated to the calibration target 1, the reference data containing information about the colors 2, 5, comparing the captured calibration data 2, 5, 6 with the reference data to calibrate the device.

The inventive target 1 of Fig. 1 can be used in a system (not shown) for calibrating an imaging device for minimizing an individual color reproducing error of such a device. The system preferably comprises the calibration target 1, an enabler (not shown), which can be the device itself, for using the device to capture calibration data 2, 5, 6 of the calibration target 1, an allocator (not shown), which also can be the device itself, for allocating the reference data associated to the calibration target 1, and a comparator (not shown), which also can be the device itself, for comparing the captured calibration data 2, 5, 6 with the reference data to calibrate the device.

## Claims

1. A method of calibrating an imaging device for minimizing an individual color reproducing error of such a device, comprising the steps of:
using the device to capture calibration data (2, 5, 6) of a calibration target (1), the calibration data (2, 5, 6) containing at least one color (2, 5),
allocate reference data associated to the calibration target (1), the reference data containing information about the at least one color (2,5),
compare the captured calibration data (2, 5, 6) with the reference data to calibrate the device, and
performing the above steps by using a calibration target (1) containing a pointer (6), the pointer (6) containing information about the reference data.

2. The method of claim 1, further comprising the steps of:
allocating the reference data by using a pointer (6) containing information about a reference file containing the reference data.

3. The method of claim 1 or any one of the above claims, further comprising the steps of:
allocating the reference data by automatically searching at least one source possibly containing the reference data.

4. The method of claim 1 or any one of the above claims, further comprising the steps of:
allocating the reference data by automatically searching at least one source of a group of sources possibly containing the reference data, the group of sources containing at least one of the following: a RAM, a ROM, a CD-ROM, a DVD, an internet website.

5. A software program or product, preferably stored on a data carrier, for executing the method of one of the claims 1 to 4 when run on a data processing system such as a computer, a scanner and/or a digital camera.

6. A system for calibrating an imaging device for minimizing an individual color reproducing error of such a device, comprising:
an enabler for using the device to capture calibration data (2, 5, 6) of a calibration target (1), the calibration data (2, 5, 6) containing at least one color (2, 5),
an allocator for allocating reference data associated to the calibration target (1), the reference data containing information about the at least one color (2, 5),
a comparator for comparing the captured calibration data (2, 5, 6) with the reference data to calibrate the device, and
a calibration target (1) containing a pointer (6), the pointer (6) containing information about the reference data.

7. The system of claim 6, further comprising:
a pointer (6) which contains information about a reference file containing the reference data.

8. The apparatus of claim 6 or 7, further comprising:
the allocator being designed to allocate the reference data by automatically searching at least one source possibly containing the reference data.

9. The apparatus of any one of the above claims 6 to 8, further comprising:
the allocator being designed to allocate the reference data by automatically searching at least one source of a group of sources possibly containing the reference data, the group of sources containing at least one of the following: a RAM, a ROM, a CD-ROM, a DVD, an internet website.

10. The system of any one of the above claims 6 to 9, further comprising:
at least the enabler, the allocator and/or the comparator comprising and/or using a electronic processor for its purposes.

11. The system of any one of the above claims 6 to 10, further comprising:
a pointer (6) which contains a barcode (6) which contains information about the reference data.

12. A calibration target (1) containing calibration data, the calibration data (2, 5, 6) containing at least one color (2, 5), for calibrating an imaging device for minimizing an individual color reproducing error of such a device, comprising:
a pointer (6), preferably comprising a barcode (6), the pointer (6) containing information about reference data associated to the calibration target (1), the reference data containing information about the at least one color (2, 5).
